# EUROPÄISCHE PATENTSCHRIFT

(11) **EP 1 240 051 B1**
(45) Veröffentlichungstag und Bekanntmachung des Hinweises auf die Patenterteilung: **16.11.2005**
(21) Anmeldenummer: 01980407.9
(22) Anmeldetag: 19.09.2001
(51) Int. Cl.: B60N 2/44, B60N 2/16

(54) **HEBELANTRIEB FÜR EINEN FAHRZEUGSITZ-EINSTELLER**
LEVER ACTUATOR FOR A VEHICLE SEAT ADJUSTER
COMMANDE A LEVIER DESTINEE A UN DISPOSITIF DE REGLAGE DE SIEGE DE VEHICULE

(30) Priorität: 20.10.2000 DE 10052089; 18.11.2000 DE 10057377
(43) Veröffentlichungstag der Anmeldung: 18.09.2002
(73) Patentinhaber: KEIPER GmbH & Co. KG, 67657 Kaiserslautern (DE)
(72) Erfinder: SCHÜLER, Rolf, 42579 Heiligenhaus (DE); ANGERMANN, Dirk, 51469 Bergisch Gladbach (DE)
(74) Vertreter: Patentanwälte Hosenthien-Held und Dr. Held
(86) Internationale Anmeldenummer: PCT/EP2001/010809
(87) Internationale Veröffentlichungsnummer: WO 2002/034565

(56) Entgegenhaltungen:
- DE-C- 19 705 485
- FR-A- 2 314 535
- US-A- 6 095 312

## Beschreibung

Die Erfindung betrifft einen Hebelantrieb für einen Fahrzeugsitz-Einsteller, insbesondere in einem Kraftfahrzeugsitz, mit den Merkmalen des Oberbegriffs des Anspruches 1.

Bei Fahrzeugsitzen sind zur Einstellung verschiedener Teile, beispielsweise der Neigung der Rückenlehne oder der Höhe der Sitzfläche zahlreiche Einsteller mit verschiedenen Antrieben bekannt. Die Einsteller, die in der DE 44 00 910 A1 und der DE 197 05 485 C1 offenbart sind, weisen ein selbstsperrendes Schrittschaltwerk auf, welches durch einen Hebel manuell angetrieben wird. Wechselseitige Hubbewegungen des Hebels werden in diskontinuierliche Drehbewegungen der Abtriebswelle des Schrittschaltwerks umgesetzt. Die Anordnungen und Abmessungen des Hebels und der mit dem Hebel in Wirkverbindung stehenden Bauteile des Schrittschaltwerks definieren das Übersetzungsverhältnis für die Übertragung des Drehmomentes. Dieser Hebelantrieb lässt in der Praxis noch Wünsche offen.

Bei einem aus der FR 2 314 535 A bekannter Hebelantrieb der eingangs genannten Art sind der Antriebshebel und der Abtriebshebel exzentrisch zueinander gelagert und durch eine Schlitz-Zapfen-Führung auf Mitnahme gekoppelt, wobei eine Schwenkbewegung des Antriebshebels in eine kleinere Schwenkbewegung des Abtriebshebels umgesetzt wird. Eine Überlastsicherung für einen Hebelantrieb ist aus der US 6 095 312 A bekannt.

Der Erfindung liegt die Aufgabe zu Grunde, einen Hebelantrieb der eingangs genannten Art zu verbessern. Diese Aufgabe wird erfindungsgemäß durch einen Hebelantrieb mit den Merkmalen des Anspruches 1 gelöst. Vorteilhafte Ausgestaltungen sind Gegenstand der Unteransprüche.

Durch eine Abwälzbewegung einer Abwälzkurve des Abtriebshebels an einer Wälzfiihrung des Antriebshebels (Evolventenhebelgetriebe) ergibt sich außer einer geringen Reibung noch der Vorteil, dass keine Kantenbelastung der Lagerstellen und damit verbundene Wirkungsgradverschlechterung auftritt. In der Regel ergibt sich bei einfacher Herstellung der Bauteile die Abwälzbewegung dadurch, dass die stärker gekrümmte Abwälzkurve berührend an der geringer gekrümmten Wälzführung anliegt.

Vorzugsweise ist der Abtriebshebel bezüglich der Abwälzkurve exzentrisch gelagert. Dies ermöglicht einerseits eine freiere, den Anwendungsbedürfnissen angepaßte Form der Abwälzkurve und der Wälzführung. Andererseits kann die Abwälzkurve so gewählt werden, dass bei größeren Schwenkwinkeln des Abtriebshebels der Abstand der Lagerstelle des Abtriebshebels zum Berühr- oder Kontaktpunkt zwischen Abwälzkurve und Wälzführung geringer wird. Dies erhöht in den ergonomisch kritischen Endlagen den Wirkungsgrad, da dann der durch den Abstand der Lagerstelle des Abtriebshebels zur Tangentialebene durch den Kontaktpunkt definierte Hebelarm für Reibkräfte im Berührpunkt bezüglich der Lagerstelle des Abtriebshebels geringer wird. Die gewünschten Eigenschaften der Abwälzkurve werden beispielsweise durch eine Herzform der Abwälzkurve als Berandung des Abtriebshebels erreicht.

Das Übersetzungsverhältnis des vom Antriebshebel auf den Abtriebshebel übertragenen Drehmomentes oder Schwenkwinkels kann über den gesamten Schwenkbereich des Antriebshebels konstant sein. Das Übersetzungsverhältnis kann sich alternativ in Abhängigkeit des übertragenen Drehmomentes ändern, wobei die Wälzführung und die Abwälzkurve zu den Übertragungsmitteln zählen. Als weiteres Übertragungsmittel ist vorzugsweise ein federnd gelagertes Zwischenelement vorgesehen, für unterschiedliche Schwenkrichtungen vorzugsweise zwei Zwischenelemente. Die Feder des Zwischenelementes, beispielsweise eine Biegefeder, gibt bei höheren Drehmomenten nach, so dass die Wälzführung ihre Lage ändert und damit sich die Abwälzbewegung des Abtriebshebels ändert. Durch die Schwenkbewegung des Zwischenelementes auf dem Antriebshebel ergeben sich geringe Hebelwegverluste zur Übersetzungsänderung. Um möglichst wenig Bauteile zu benötigen, ist die Wälzführung vorzugsweise an dem Zwischenelement ausgebildet, welcher in diesem Fall schwenkbar im Antriebshebel gelagert ist.

Bei geringer Belastung ist es möglich, beispielsweise mit einem kleinen Schwenkwinkel des schwenkbaren Antriebshebels eine großen Schwenkwinkel des Abtriebshebels und damit eine große Bewegung des Einstellers zu erreichen. Wenn das Übersetzungsverhältnis sich in Abhängigkeit des übertragenen Drehmomentes ändert, kann bei großen Belastungen der Hebelantrieb das Übersetzungsverhältnis reduzieren, um den Einsteller vor hohen Lasten und Überlasten zu schützen. Im Extremfall verhindert vorzugsweise das Übertragungsmittel als Überlastsicherung eine Übertragung des Drehmoments. Die Änderung des Übersetzungsverhältnisses erfolgt vorzugsweise automatisch, d.h. ohne Zutun des Benutzers. Mit einem Antriebshebel können auch zwei oder mehr Abtriebshebel angetrieben werden, beispielsweise über entsprechend viele Übertragungsmittel.

Der erfindungsgemäße Hebelantrieb kann bei verschiedenen Einstellern eines Fahrzeugsitzes eingesetzt werden, beispielsweise bei einem Dreheinsteller zur Sitzhöheneinstellung eines Fahrzeugsitzes mit zwischengeschaltetem Schrittschaltwerk für eine diskontinuierliche Pumpbewegung oder bei einem als Taumelbeschlag ausgebildeten Lehneneinsteller für eine kontinuierliche Schwenkbewegung.

Im folgenden ist die Erfindung anhand zweier in der Zeichnung dargestellter Ausführungsbeispiele näher erläutert. Es zeigen
- Fig. 1: eine teilweise geschnitten dargestellte Ansicht des ersten Ausführungsbeispiels in der Ruhestellung,
- Fig. 2: eine Darstellung entsprechend Fig. 1 ohne Achsen in einer ausgelenkten Stellung,
- Fig. 3: eine schematische Darstellung eines beispielhaften Fahrzeugsitzes mit einem Hebelantrieb gemäß dem ersten Ausführungsbeispiel,

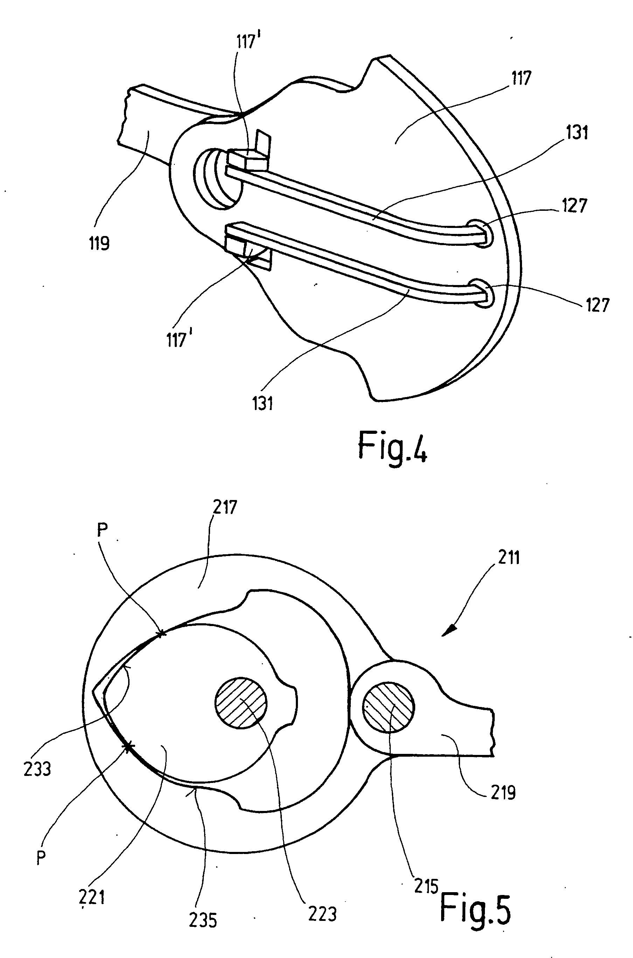

- Fig. 4: eine perspektivische Ansicht entsprechend Fig. 1 der vom Abtriebshebel abgewandten Seite ohne die Achse des Antriebshebels, und
- Fig. 5: eine teilweise geschnitten dargestellte Ansicht des zweiten. Ausführungsbeispiels in der Ruhestellung.

Im ersten Ausführungsbeispiel weist ein Fahrzeugsitz 101 einen Dreheinsteller 103 mit einem Schrittschaltwerk auf. Der Dreheinsteller 103 dient als Sitzhöheneinsteller zur Einstellung der Höhe der Sitzfläche und wirkt unangetrieben als Sperre. Der Dreheinsteller 103 wird über einen am Schrittschaltwerk angreifenden Hebelantrieb 111, welcher als ein Regelgetriebe ausgebildet ist, mit diskontinuierlichen Drehbewegungen in der Art einer Pumpbewegung angetrieben.

Der Hebelantrieb 111 weist einen um eine Achse 115 schwenkbar gelagerten Antriebshebel 1 17 auf. Die Achse 115 ist bezüglich des einen leicht pfeilförmigen Grundriß aufweisenden, flachen Antriebshebels 117 exzentrisch an dem von der Pfeilspitze abgewandten Ende angeordnet. Ein länglicher Handhebel 119 ist an einem Ende ebenfalls um die Achse 115 schwenkbar gelagert und dort mit dem Antriebshebel 117 drehfest verbunden oder einstückig mit diesem ausgebildet. Der Handhebel 119 ist in Verlängerung der von der Pfeilspitze abgewandte Seite des Antriebshebels 117 parallel zur Spiegelsymmetrieachse des Antriebshebels 117 angeordnet. Der Handhebel 119 ist als Bedienelement für den Sitzbenutzer von außen zugänglich angebracht, wobei der Sitzbenutzer durch eine Pumpbewegung aus einer Ruhestellung heraus den Hebelantrieb 111 manuell bedient.

Ein flacher Abtriebshebel 121 von herzförmiger Gestalt ist an dem Antriebshebel 117 flach anliegend angeordnet. Ein fest mit dem Abtriebshebel 121 verbundener Zapfen 123 steht zu der vom Antriebshebel 117 abgewandten Seite vom Abtriebshebel 121 ab. Der Zapfen 123 ist exzentrisch an dem von der Herzspitze abgewandten Ende des Abtriebshebels 121 angeordnet und steht in Getriebeverbindung mit dem angeschlossenen Schrittschaltwerk des Dreheinstellers 103.

Zwei flache, längliche, leicht gekrümmte Zwischenhebel 125 von gleicher Stärke wie der Abtriebshebel 121 sind symmetrisch zur Spiegelsymmetrieachse des Antriebshebels 117 angeordnet und an ihrem der Pfeilspitze zugewandten Ende mittels Lagerbuchsen 127 im Antriebshebel 117 gelagert. An jedem Zwischenhebel 125 ist je eine Biegefeder 131 mit einem Vierkantprofil angebracht, welche von der vom Abtriebshebel 121 abgewandten Seite des Antriebshebels 117 durch die Lagerbuchse 127 in eine viereckige Aufnahme des entsprechenden Zwischenhebels 125 gesteckt ist. Zu ihrem anderen Ende hin ist die Biegefeder 131 ungefähr parallel zur Spiegelsymmetrieachse des Antriebshebels 117 liegend angeordnet, wobei sie in der Nähe der Achse 115 auf der bezüglich der Spiegelsymmetrieachse des Antriebshebels 117 nach außen weisenden Seite an einer Lasche 117' des Antriebshebels 117 anliegt.

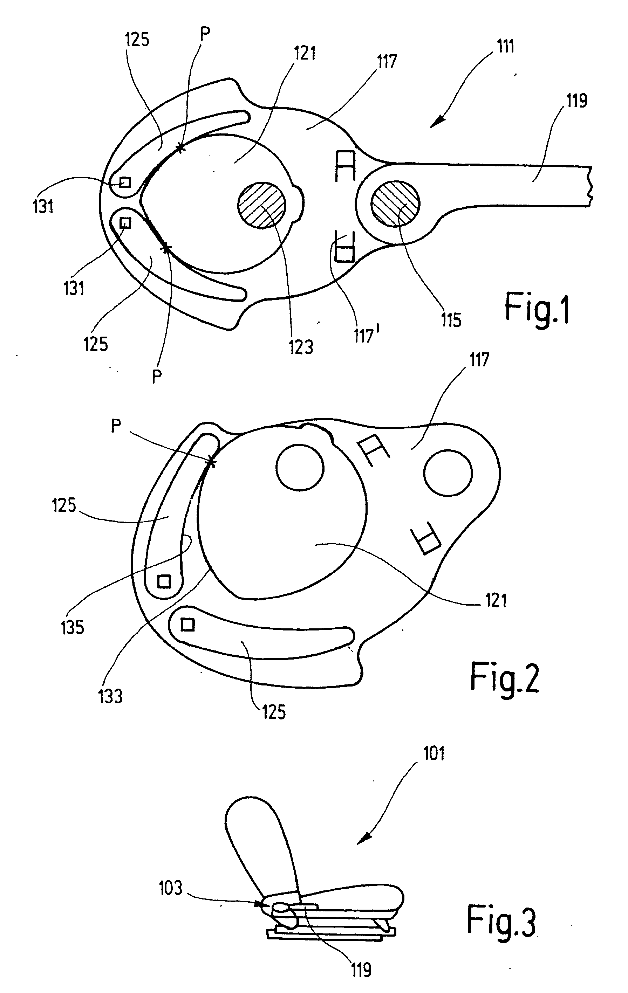

Die bezüglich des Zapfens 123 radial nach außen gewandte Seite des Abtriebshebels 121 bildet eine Abwälzkurve 133, während die entsprechende, dem Abtriebshebel 121 zugewandte Außenseite der Zwischenhebel 125 eine Wälzführung 135 bildet. Die Abwälzkurve 133 hat eine stärkere Krümmung als die Wälzführung 135 und berührt daher letztere in einem Kontaktpunkt P, in der Ruhestellung jeden Zwischenhebel 125 in je einem Kontaktpunkt P. Bei einer Schwenkbewegung des Handhebels 119, beispielsweise nach oben, wird der Antriebshebel 117 um die Achse 115 nach unten geschwenkt. Über die in Schwenkrichtung angeordnete, vorliegend also obere Biegefeder 131 wird der obere Zwischenhebel 125 mitgenommen, welcher schwenkbar auf der Biegefeder 131 gelagert ist. Dadurch erfolgt eine Abwälzbewegung zwischen Zwischenhebel 125 und Abtriebshebel 121. Bei dieser Abwälzbewegung mit geringer (Roll-)Reibung verlagert sich der Kontaktpunkt P entlang der Abwälzkurve 133 und der Wälzführung 135, und der Abtriebshebel 121 dreht sich mit samt dem Zapfen 123. Eine solche ausgelenkte Stellung nach einer Schwenkbewegung entgegen dem Uhrzeigersinn nach oben ist in Fig. 2 dargestellt. Der Abstand zwischen der Achse 115 und dem Kontaktpunkt P ist deutlich größer als der Abstand zwischen dem Zapfen 123 und dem Kontaktpunkt P, so daß kleine Schwenkwinkel des Antriebshebels 117, beispielsweise 30°, in große Schwenkwinkel des Abtriebshebels 121, beispielsweise 120°, übersetzt werden. Mit diesem hohen Übersetzungsverhältnis kann eine rasche Einstellung des Dreheinstellers 103 erreicht werden, vorliegend also eine Grobeinstellung der Sitzhöhe. Da die Abwälzkurve 133 sich aufgrund der Herzform des Abtriebshebels 121 mit zunehmendem Schwenkwinkel dem Zapfen 123 nähert, vorzugsweise aufgrund einer stärkeren Krümmung, verringert sich der Hebelarm, d.h. der Abstand zwischen dem Zapfen 123 und der Tangentialebene durch den Kontaktpunkt P, für das Reibmoment aufgrund der Reibkräfte im Kontaktpunkt P. Der ansonsten ergonomisch kritische Wirkungsgrad in den Abtriebshebelendlagen verbessert sich dadurch.

Wenn die vom Hebelantrieb 111 zu übertragenden Drehmomente groß sind, beispielsweise bei einsitzendem Sitzbenutzer, setzt der Abtriebshebel 121 über den entsprechenden Zwischenhebel 125 der zugehörigen Biegefeder 131 ein größeres Moment entgegen. Die Biegefeder 131 gibt etwas nach und schwenkt den Zwischenhebel 125 einige Winkelgrade nach außen. Der Abtriebshebels 121 bewegt sich dadurch zunächst nicht, so daß ein gewisser Steuerweg oder Leerhub vom Antriebshebel 117 durchfahren wird, der ohne Last gleich Null wäre. Im weiteren Verlauf der Betätigung setzt die Abwälzbewegung des Abtriebshebels 121 ein, und der Zwischenhebel 125 schwenkt in Abhängigkeit des vom Abtriebshebel 121 entgegengesetzten Momentes um den Lagerpunkt der Biegefeder 131. Dabei verringert sich das Übersetzungsverhältnis, d.h. der Schwenkwinkel des Abtriebshebels 121 infolge der Abwälzbewegung wird kleiner. Mit dem niedrigeren Übersetzungsverhältnis kann eine Feineinstellung des Dreheinstellers 103 erreicht werden.

Das zweite Ausführungsbeispiel betrifft einen Hebelantrieb 211 mit konstantem Übersetzungsverhältnis. Gleiche oder gleich wirkende Bauteile tragen um 100 höhere Bezugszeichen. Soweit nicht anders beschrieben, stimmt dieses Ausführungsbeispiel mit dem vorherigen überein.

Mit dem um eine Achse 215 schwenkbaren Antriebshebel 217 ist ein für den Benutzer zugänglicher Handhebel 219 drehfest verbunden. Von einem herzförmigen Abtriebshebel 221 steht ein Zapfen 223 ab, welcher mit dem nachgeschalteten Schrittschaltwerk oder dergleichen in Getriebeverbindung steht. Die bezüglich der Achse 215 radial nach außen gewandte Seite des Abtriebshebel 221 bildet eine Abwälzkurve 233. Die Abwälzkurve 233 berührt in einem Kontaktpunkt P, in der Ruhestellung in zwei Kontaktpunkten P, eine Wälzführung 235 des Antriebshebels 217 von kleinerer Krümmung. Die Wälzführung 235 besteht aus dem Rand eines im Antriebshebel 217 als Aussparung vorgesehenen Bauraumes, welcher zugleich den Abtriebshebel 221 aufnimmt.

Bei einer Schwenkbewegung des Handhebels 219 führt der Abtriebshebel 221 eine Abwälzbewegung am Antriebshebel 217 aus, welche den Schwenkwinkel vergrößert. Die Funktionsweise ist die gleiche wie im vorherigen Ausführungsbeispiel, aber das Übersetzungsverhältnis zwischen Antriebshebel 217 und Abtriebshebel 221 bleibt konstant. Eine nasenförmige Ausbuchtung der Abwälzkurve 233 und eine passende Aufnahme der Wälzführung 235 können als Anschlag zur Begrenzung der Schwenkbewegung des Abtriebshebels 221 dienen. Dies gilt auch im Falle des ersten Ausführungsbeispiels.

### Bezugszeichenliste

- 101: Fahrzeugsitz
- 103: Dreheinsteller
- 111,211: Hebelantrieb
- 115,215: Lagerbolzen, Achse
- 117,217: Antriebshebel
- 119,219: Handhebel
- 121, 221: Abtriebshebel
- 117': Lasche
- 123,223: Zapfen
- 125: Zwischenhebel
- 127: Lagerbuchse
- 131: Biegefeder
- 133, 233: Abwälzkurve
- 135,235: Wälzführung
- P: Kontaktpunkt

## Patentansprüche

1. Hebelantrieb für einen Fahrzeugsitz-Einsteller, insbesondere in einem Kraftfahrzeugsitz, mit einem durch manuelle Betätigung bewegbaren, schwenkbar gelagerten Antriebshebel (117; 217) und wenigstens einem mit dem Einsteller (103) in Wirkverbindung stehenden, schwenkbar gelagerten Abtriebshebel (121; 221), **dadurch gekennzeichnet, dass** der Abtriebshebel (121; 221) mit einer Abwälzkurve (133; 233) an einer Wälzführung (135; 235) des Antriebshebels (117; 217) anliegt und zur Übersetzung einer Schwenkbewegung des Antriebshebels (117; 217) in eine größere Schwenkbewegung des Abtriebshebels (121; 221) eine Abwälzbewegung an der Wälzführung (135; 235) durchführt.

2. Hebelantrieb nach Anspruch 1, **dadurch gekennzeichnet, dass** die stärker gekrümmte Abwälzkurve (133; 233) berührend an der geringer gekrümmten Wälzführung (135; 235) anliegt.

3. Hebelantrieb nach Anspruch 1 oder 2, **dadurch gekennzeichnet, dass** der Abtriebshebel (121; 221) bezüglich der Abwälzkurve (133; 233) exzentrisch gelagert ist.

4. Hebelantrieb nach Anspruch 2 und 3, **dadurch gekennzeichnet, dass** bei größeren Schwenkwinkeln des Abtriebshebels (121; 221) der Abstand der Lagerstelle (123; 223) des Abtriebshebels (121; 221) zum Kontaktpunkt (P) zwischen der Abwälzkurve (133; 233) und der Wälzführung (135; 235) geringer wird.

5. Hebelantrieb nach einem der Ansprüche 1 bis 4, **dadurch gekennzeichnet, dass** das Übersetzungsverhältnis vom Antriebshebels (217) auf den Abtriebshebel (221) über den gesamten Schwenkbereich des Antriebshebels (217) konstant ist.

6. Hebelantrieb nach einem der Ansprüche 1 bis 4, **dadurch gekennzeichnet, dass** das Übersetzungsverhältnis vom Antriebshebels (117) auf den Abtriebshebel (121) sich in Abhängigkeit des übertragenen Drehmomentes ändert.

7. Hebelantrieb nach Anspruch 6, **dadurch gekennzeichnet, dass** zwischen dem Antriebshebel (117) und dem Abtriebshebel (121) wenigstens ein federnd gelagertes Zwischenelement (125) vorgesehen ist, an welchem insbesondere die Wälzführung (135) ausgebildet ist.

8. Hebelantrieb nach einem der Ansprüche 5 bis 7, **dadurch gekennzeichnet, dass** bei geringen Drehmomenten die Übertragungsmittel (125, 133, 135) kleine Schwenkwinkel des Antriebshebels (117) in große Schwenkwinkel des Abtriebshebels (121) umsetzen.

9. Hebelantrieb nach einem der Ansprüche 6 bis 8, **dadurch gekennzeichnet, dass** bei zu großen Drehmomenten die Übertragungsmittel (25, 133, 135) als Überlastsicherung wirken und kein Drehmoment übertragen.

10. Fahrzeugsitz, insbesondere Kraftfahrzeugsitz, mit einem Einsteller (3; 103), **gekennzeichnet durch** einen Hebelantrieb (11;111;211) nach einem der Ansprüche 1 bis 9.

## Claims

1. Lever drive for a vehicle seat adjuster, in particular in a motor vehicle seat, having a drive lever (117; 217) which can be moved by means of manual activation and which is supported in a pivotable manner, and at least one driven lever (121; 221) which is supported in a pivotable manner and which is operationally connected to the adjuster (103), **characterised in that** the driven lever (121; 221) abuts a roller guide (135; 235) of the drive lever (117; 217) with a roller cam (133; 233) and carries out a roller movement on the roller guide (135; 235) in order to convert a pivoting movement of the drive lever (117; 217) into a larger pivoting movement of the driven lever (121; 221).

2. Lever drive according to claim 1, **characterised in that** the roller cam (133; 233) which is more curved is in contacting abutment with the roller guide (135; 235) which is less curved.

3. Lever drive according to claim 1 or claim 2, **characterised in that** the driven lever (121; 221) is arranged in an eccentric manner relative to the roller cam (133; 233).

4. Lever drive according to claim 2 and claim 3, **characterised in that**, at relatively large pivot angles of the driven lever (121; 221), the distance of the bearing location (123; 223) of the driven lever (121; 221) relative to the contact point (P) between the roller cam (133; 233) and the roller guide (135; 235) becomes smaller.

5. Lever drive according to any one of claims 1 to 4, **characterised in that** the transmission ratio from the drive lever (217) to the driven lever (221) is constant over the entire pivot range of the drive lever (217).

6. Lever drive according to any one of claims 1 to 4, **characterised in that** the transmission ratio from the drive lever (117) to the driven lever (121) changes in accordance with the torque transmitted.

7. Lever drive according to claim 6, **characterised in that** at least one intermediate element (125) is provided between the drive lever (117) and the driven lever (121), which intermediate element (125) is supported in a resilient manner and on which in particular the roller guide (135) is constructed.

8. Lever drive according to any one of claims 5 to 7, **characterised in that**, at low torques, the transmission means (125, 133, 135) convert small pivot angles of the drive lever (117) into large pivot angles of the driven lever (121).

9. Lever drive according to any one of claims 6 to 8, **characterised in that**, at excessively high torques, the transmission means (25, 133, 135) function as overload protection means and do not transmit any torque.

10. Vehicle seat, in particular a motor vehicle seat, having an adjuster (3; 103), **characterised by** a lever drive (11; 111; 211) according to any one of claims 1 to 9.

## Revendications

1. Commande à levier pour un dispositif d'ajustement d'un siège de véhicule, en particulier dans un siège de véhicule automobile, comportant un levier de commande (117 ; 217) monté apte à pivoter, déplaçable par actionnement manuel, et au moins un levier récepteur (121 ; 221) monté apte à pivoter, se trouvant en liaison active avec le dispositif d'ajustement (103), **caractérisé par le fait que** le levier récepteur (121 ; 221) s'applique par une came de déroulement (133 ; 233) sur un guidage de roulement (135 ; 235) du levier de commande (117 ; 217) et accomplit un mouvement de déroulement sur le guidage de roulement (135 ; 235) pour la transmission d'un mouvement de pivotement du levier de commande (117 ; 217) en un mouvement de pivotement plus grand du levier récepteur (121 ; 221).

2. Commande à levier selon la revendication 1, **caractérisée par le fait que** la came de déroulement (133 ; 233) plus fortement cintrée s'applique de manière tangente sur le guidage de roulement (135 ; 235) plus faiblement cintré.

3. Commande à levier selon l'une des revendications 1 ou 2, **caractérisée par le fait que** le levier récepteur (121 ; 221) est monté de façon excentrique par rapport à la came de déroulement (133 ; 233).

4. Commande à levier selon les revendications 2 et 3, **caractérisée par le fait que**, pour des angles de pivotement plus grands du levier de commande (121 ; 221), la distance du point d'appui (123 ; 223) du levier récepteur (121 ; 221) par rapport au point de contact (P) entre la came de déroulement (133 ; 233) et le guidage de roulement (135 ; 235) est plus petite.

5. Commande à levier selon l'une des revendications 1 à 4, **caractérisée par le fait que** le rapport de transmission du levier de commande (217) sur le levier récepteur (221) est constant sur la totalité de la plage de pivotement du levier de commande (217).

6. Levier de commande selon l'une des revendications 1 à 4, **caractérisé par le fait que** le rapport de transmission du levier de commande (117) sur le levier récepteur (121) change en fonction du moment de rotation transmis.

7. Commande à levier selon la revendication 6, **caractérisée par le fait qu'**entre le levier de commande (117) et le levier récepteur (121) est prévu au moins un élément intermédiaire (125) monté de manière élastique, sur lequel en particulier est formé le guidage de roulement (135).

8. Commande à levier selon l'une des revendications 5 à 7, **caractérisée par le fait que** pour de faibles moments de rotation, les moyens de transmission (125 ; 133 ; 135) transforment de petits angles de pivotement du levier de commande (117) en grands angles de pivotement du levier récepteur (121).

9. Commande à levier selon l'une des revendications 6 à 8, **caractérisée par le fait que**, pour de moments de rotation trop grands, les moyens de transmission (25 ; 133 ; 135) agissent comme sécurité de surcharge et ne transmettent pas de moment de rotation.

10. Siège de véhicule, en particulier siège de véhicule automobile, comportant un dispositif d'ajustement (3 ; 103), **caractérisé par** une commande à levier (11 ; 111 ; 211) telle que définie à l'une des revendications 1 à 9.
